# EUROPÄISCHE PATENTSCHRIFT

(11) **EP 3 182 193 B1**
(45) Veröffentlichungstag und Bekanntmachung des Hinweises auf die Patenterteilung: **04.08.2021**
(21) Anmeldenummer: 16203638.8
(22) Anmeldetag: 13.12.2016
(51) Int. Cl.: G02B 27/62, G02B 27/30, G01B 11/27, F41G 3/32, G01C 15/00

(54) **OPTISCHES SYSTEM**
OPTICAL SYSTEM
SYSTÈME OPTIQUE

(30) Priorität: 16.12.2015 DE 102015016274
(43) Veröffentlichungstag der Anmeldung: 21.06.2017
(73) Patentinhaber: MBDA Deutschland GmbH, 86529 Schrobenhausen (DE)
(72) Erfinder: SENFT, Christoph, 80333 München (DE); SCHNEIDER, Michael, 85229 Markt Indersdorf (DE); MOHRING, Bernd, 86529 Schrobenhausen (DE); TASSINI, Leonardo, 80796 München (DE); THEOBALD, Christian, 86153 Augsburg (DE)
(74) Vertreter: Isarpatent

(56) Entgegenhaltungen:
- US-A- 5 085 509

## Beschreibung

Die Erfindung betrifft ein optisches System. Weiterhin betrifft die Erfindung ein Verfahren zum Justieren eines optischen Strahls, insbesondere eines Signalstrahls, wobei bevorzugt ein derartiges optisches System verwendet wird. Mit dem erfindungsgemäßen optischen System und dem erfindungsgemäßen Verfahren ist insbesondere ein Signalstrahl räumlich, insbesondere in Winkel und Position, stabilisierbar.

Ein herkömmliches Strahlausrichtungssystem ist aus der Druckschrift US5085509 A1 bekannt.

Wird ein optischer Strahl über eine rotierbare Anordnung geführt, so erfährt der Strahl eine Rotation um die momentane reale mechanische Rotationsachse. Eine solche rotierbare Anordnung kann insbesondere ein Coudé-Strahlengang sein. Der optische Strahl kann insbesondere ein Laserstrahl oder ein abbildender Strahl sein. Um eine Abbildung in einem derartigen rotierenden System zu stabilisieren oder um einen rotationssymmetrischen Strahl ortsfest zu stabilisieren, muss der Strahl exakt auf die reale mechanische Rotationsachse justiert werden. Außerdem darf der Strahl besagte Rotationsachse auch während der Rotation nicht verlassen. In vorhandenen optischen Systemen können diese Voraussetzungen nicht oder nur bedingt eingehalten werden.

Es ist daher Aufgabe der vorliegenden Erfindung ein optisches System bereitzustellen, das bei einfacher und kostengünstiger Herstellung und Montage eine sichere und zuverlässige Stabilisierung eines Signalstrahls auf der Rotationsachse eines rotierbaren Systems ermöglicht. Es ist außerdem Aufgabe der Erfindung, ein entsprechendes Verfahren anzugeben.

Gelöst wird die Aufgabe durch die Merkmale der nebengeordneten Ansprüche. Somit wird die Aufgabe gelöst durch ein optisches System, das einen Signaleingang, einen Signalausgang, eine Hilfslichtquelle und ein Rotationssystem umfasst. An dem Signaleingang ist ein Signalstrahl aufnehmbar. An dem Signalausgang ist der Signalstrahl ausgebbar. Bei dem Signalstrahl kann es sich um einen abbildenden Strahl handeln. Alternativ oder zusätzlich kann der Signalstrahl ein hochenergetischer Strahl, wie insbesondere ein Laserstrahl, sein. Mit der Hilfslichtquelle ist ein Hilfslichtstrahl aussendbar. Dabei ist vorgesehen, dass der Hilfslichtstrahl in Winkel und Position zu dem Signalstrahl synchron ist. Alternativ kann der Hilfslichtstrahl aus dem Signalstrahl ausgekoppelt werden. Das Rotationssystem ist um eine Rotationsachse rotierbar und weist einen Signalauskoppelspiegel und einen Referenzspiegel auf. Außerdem weist das optische System einen Achseinkoppelspiegel auf. Mit dem Achseinkoppelspiegel sind der Signalstrahl und der Hilfsstrahl in das Rotationssystem einkoppelbar. Mit dem Signalauskoppelspiegel wiederum ist der Signalstrahl aus dem Rotationssystem auskoppelbar. Besonders vorteilhaft ist vorgesehen, dass der Signalstrahl von dem Signalauskoppelspiegel unmittelbar zu dem Signalausgang leitbar ist. Dazu erfolgt vorteilhafter Weise keine Beeinflussung des Signalstrahls.

Bevorzugt ist vorgesehen, dass die Rotationsachse den Achseinkoppelspiegel, den Signalauskoppelspiegel und den Referenzspiegel schneidet. Weiterhin ist vorgesehen, dass der Signalstrahl von dem Signaleingang über den Achseinkoppelspiegel zu dem Signalauskoppelspiegel lenkbar ist. Der Hilfsstrahl wiederum ist über den Achseinkoppelspiegel und durch den Signalauskoppelspiegel hindurch auf den Referenzspiegel lenkbar. Von dem Referenzspiegel ist der Hilfsstrahl zumindest teilweise zu einem Reflexionshilfsstrahl rückreflektierbar. Somit verläuft der Reflexionshilfsstrahl insbesondere durch den Signalauskoppelspiegel hindurch und über den Achseinkoppelspiegel zurück zu der Hilfslichtquelle. Weiterhin ist vorgesehen, dass das optische System einen Winkelsensor umfasst. Mit dem Winkelsensor ist eine Winkelabweichung zwischen dem Hilfsstrahl und dem Reflexionshilfsstrahl erfassbar. Es ist ersichtlich, dass bei Nichtrotieren des Rotationssystems eine derartige Winkelabweichung nur dann vorhanden ist, wenn der Referenzspiegel inkorrekt eingestellt ist. Somit kann durch Verkippen des Referenzspiegels die Winkelabweichung beeinflusst werden. Sollte bei rotierendem Rotationssystem eine Winkelabweichung vorhanden sein, so sind der Signalstrahl und der Hilfsstrahl nicht auf die Rotationsachse ausgerichtet. Somit ist durch Verkippen das Achseinkoppelspiegels die Winkelabweichung beeinflussbar. Das optische System ermöglicht daher durch Verkippen des Achseinkoppelspiegels den Signalstrahl unter Bestimmung der Winkelabweichung parallel zu der Rotationsachse auszurichten, wobei insbesondere ein zusätzliches Verkippen des Referenzspiegels zum Ausrichten des Reflexionshilfsstrahls erfolgt.

Besonders vorteilhaft eignet sich das optische System für verschiedene Arten von Signalstrahlen. So kann der Signalstrahl ein abbildender Strahl oder ein Laserstrahl sein. Durch das synchrone Einkoppeln des Hilfsstrahls, bedingt eine Ausrichtung des Hilfsstrahls parallel zu der Rotationsachse, dass auch der Signalstrahl zwingend parallel zu der Rotationsachse ausgerichtet ist. Der Hilfsstrahl lässt sich über den Referenzspiegel leicht reflektieren, sodass eine Messung von Winkelabweichungen ermöglicht ist. Die Winkelabweichungen gelten daher sowohl für den Hilfsstrahl als auch für den Signalstrahl.

Die Unteransprüche haben bevorzugte Weiterbildungen der Erfindung zum Inhalt.

Vorteilhafter Weise ist der Winkelsensor und die Hilfslichtquelle in einer einzigen Vorrichtung zusammengefasst. Bei dieser einzigen Vorrichtung handelt es sich vorteilhafter Weise um einen Autokollimator. Somit ist feststellbar, unter welchem Winkel der Reflexionshilfsstrahl auf dem Autokollimator auftrifft. Dies ist vergleichbar mit dem Hilfsstrahl, sodass eine Winkelabweichung zwischen Reflexionshilfsstrahl und Hilfsstrahl erfassbar ist. Da die Hilfslichtquelle und der Winkelsensor in dem Autokollimator zusammengefasst sind, und da der Reflexionshilfsstrahl aufgrund der Rückreflexion durch den Referenzspiegel denselben optischen Weg wie der Hilfsstrahl zurücklegt, sind keine zusätzlichen optischen Systeme notwendig, um den Reflexionshilfsstrahl umzulenken. Die Bestimmung der Winkelabweichung durch den Autokollimator erfolgt daher auf sehr einfache und dennoch zuverlässige Art und Weise.

In einer bevorzugten Ausführungsform beschreibt eine Reflexionshilfsstrahlprojektion des Reflexionshilfsstrahls auf dem Winkelsensor eine erste Kreisbahn, wenn das Rotationssystem rotiert. Dabei ist durch Verkippen des Reflexionsspiegels ein erster Radius der ersten Kreisbahn beeinflussbar. Durch Verkippen des Achseinkoppelspiegels sind erste Mittelpunktkoordinaten der ersten Kreisbahn beeinflussbar. Es ist somit ersichtlich, dass die Winkelabweichung durch Verkippen des Achseinkoppelspiegels und des Reflexionsspiegels beeinflussbar sind. Insbesondere sind die Beeinflussungen der Winkelabweichung durch Reflexionsspiegel und Achseinkoppelspiegel unabhängig voneinander. So kann der Hilfsstrahl und damit der Signalstrahl durch Verkippen des Achseinkoppelspiegels parallel zu der Rotationsachse des Rotationssystems ausgerichtet werden, wobei insbesondere ein Verkippen des Referenzspiegels zum Ausrichten des Reflexionshilfsstrahls erfolgt.

Das optische System weist bevorzugt einen Signaleinkoppelspiegel auf. Dazu ist vorgesehen, dass der Signalstrahl von dem Signaleingang teilweise über den Signaleinkoppelspiegel zu dem Achseinkoppelspiegel und teilweise über den Signaleinkoppelspiegel zu einem optischen Sensor leitbar ist. Besonders vorteilhaft ist derjenige Anteil des Signalstrahls, der zu dem Achseinkoppelspiegel leitbar ist, größer als derjenige Anteil des Signalstrahls, der zu dem optischen Sensor leitbar ist. Durch den Signaleinkoppelspiegel ist außerdem der Hilfsstrahl von der Hilfslichtquelle teilweise zu dem Achseinkoppelspiegel und teilweise zu dem optischen Sensor leitbar. Somit ist von dem optischen Sensor sowohl der Signalstrahl als auch der Hilfsstrahl erfassbar. Anhand von Messdaten des optischen Sensors sind somit der Signalstrahl und der Hilfsstrahl in Winkel und Position synchronisierbar. Dies führt vorteilhafter Weise dazu, dass jede Beeinflussung des Hilfsstrahls gleichbedeutend ist mit einer Beeinflussung des Signalstrahls. Da eine Winkelabweichung des Hilfsstrahls gegenüber dem Reflexionshilfsstrahl durch den Winkelsensor, insbesondere durch den Autokollimator, sehr einfach bestimmbar ist, lässt sich somit auch die Winkelabweichung des Signalstrahls auf sehr einfache Art und Weise bestimmen. Somit ist die Ausrichtung des Signalstrahls parallel zu der Rotationsachse sehr einfach möglich.

In einer weiteren bevorzugten Ausführungsform der Erfindung weist das optische System einen Rotationseinkoppelspiegel auf. Der Signalstrahl und der Hilfsstrahl sind über den Rotationseinkoppelspiegel in vorteilhafter Weise in das Rotationssystem einkoppelbar. Insbesondere sind der Hilfsstrahl und der Signalstrahl über den Rotationseinkoppelspiegel auf den Achseinkoppelspiegel lenkbar. Der Rotationseinkoppelspiegel ist vorteilhafter Weise verkippbar, um eine Position des Signalstrahls und des Hilfsstrahls einzustellen.

In einer besonders vorteilhaften Ausführungsform weist das Rotationssystem einen Positionsdetektor auf. Mit dem Positionsdetektor ist eine Hilfsstrahlprojektion des Hilfsstrahls detektierbar. Besonders vorteilhaft ist der Positionsdetektor derart angeordnet, dass die Rotationsachse des Rotationssystems den Positionsdetektor schneidet. Der Hilfsstrahl ist durch den Referenzspiegel vorteilhafter Weise teilweise zu dem Reflexionshilfsstrahl rückreflektierbar und teilweise durch den Referenzspiegel hindurch zur Abbildung der Hilfsstrahlprojektion auf den Positionsdetektor leitbar. Durch eine derartige Anordnung beschreibt die Hilfsstrahlprojektion eine zweite Kreisbahn auf dem Positionsdetektor, wenn der Hilfsstrahl parallel zu der Rotationsachse ausgerichtet ist und die Rotationsvorrichtung rotiert. Die Kreisbahn erstreckt sich dabei um einen Mittelpunkt, wobei der Mittelpunkt demjenigen Punkt entspricht, an dem die Rotationsachse den Positionsdetektor schneidet. Es ist vorgesehen, dass durch Verkippen des Rotationseinkoppelspiegels der zweite Radius der zweiten Kreisbahn beeinflussbar ist.

Außerdem ist besonders vorteilhaft vorgesehen, dass durch gemeinsames Verkippen des Rotationseinkoppelspiegels und des Achseinkoppelspiegels der Hilfsstrahl und damit auch der Signalstrahl parallel zu der Rotationsachse verschiebbar ist.

Die Hilfslichtquelle ist bevorzugt eine Laserlichtquelle. Somit ist besonders vorteilhaft vorgesehen, dass ein Autokollimator vorhanden ist, der einerseits ein Laserlicht aussendet, andererseits zur Detektion einer Rückreflexion dieses Laserlichts ausgebildet ist. Dabei ist das Laserlicht einfach und zuverlässig handhabbar, sodass sichere und zuverlässige Messungen erfolgen.

Vorteilhafterweise weist das optische System eine Steuerungsvorrichtung auf. Die Steuerungsvorrichtung ist dabei eingerichtet, den Referenzspiegel zu verkippen, bis der erste Radius der ersten Kreisbahn der Reflexionshilfsstrahlprojektion auf dem Winkelsensor den Wert 0 ergibt. Auf diese Weise ist der Referenzspiegel derart ausgerichtet, dass die Rotationsachse den Referenzspiegel unter einem Winkel von 90° schneidet. Weiterhin ist die Steuervorrichtung ausgebildet, den Achseinkoppelspiegel zu verkippen, bis die ersten Mittelpunktskoordinaten der ersten Kreisbahn der Reflexionshilfsstrahlprojektion auf dem Winkelsensor denjenigen Winkelkoordinaten entsprechen, aus denen der Hilfsstrahl ausgesandt worden ist. Insbesondere entsprechen diejenigen Winkelkoordinaten, aus denen der Hilfsstrahl ausgesandt worden ist, den Ursprungskoordinaten eines Koordinatensystems, in dem die erste Kreisbahn bestimmbar ist. Auf diese Weise ist keine Winkelabweichung zwischen dem Hilfsstrahl und dem Reflexionshilfsstrahl vorhanden. Dies bedeutet, dass der Hilfsstrahl und damit auch der Reflexionshilfsstrahl sowie der Signalstrahl parallel zu der Rotationsachse ausgerichtet sind. Zusätzlich ist die Steuerungsvorrichtung eingerichtet, den Rotationseinkoppelspiegel und den Achseinkoppelspiegel kombiniert zu verkippen, bis der zweite Radius der zweiten Kreisbahn den Wert 0 ergibt. In diesem Fall sind der Hilfsstrahl und damit auch der Reflexionshilfsstrahl sowie der Signalstrahl auf die Rotationsachse verschoben. Somit ist der Signalstrahl auf der Rotationsachse stabilisiert, sodass eine Rotation des Rotationssystems, mit Ausnahme einer Drehung um sich selbst, nicht zu einer Beeinflussung des Signalstrahls führt.

Alternativ oder zusätzlich ist vorgesehen, dass die Steuerungsvorrichtung eingerichtet ist, das Rotationssystem zum Rotieren um die Rotationsachse anzusteuern. Weiterhin ist die Steuerungsvorrichtung eingerichtet, die ersten Mittelpunktskoordinaten der ersten Kreisbahn zu bestimmen. Aus den ersten Mittelpunktskoordinaten der ersten Kreisbahn der Reflexionshilfsstrahlprojektion lässt sich eine notwendige Verkippung für den Achseinkoppelspiegel bestimmen. Die notwendige Verkippung des Achseinkoppelspiegels führt dazu, dass die Mittelpunktskoordinaten der ersten Kreisbahn auf diejenigen Koordinaten verschoben werden, von denen aus der Hilfsstrahl ausgesandt worden ist. Somit ist eine Verkippung des Reflexionsspiegels nicht notwendig. Die Steuerungsvorrichtung ist weiterhin eingerichtet, den Achseinkoppelspiegel um die notwendige Verkippung zu verkippen. Schließlich ist die Steuerungsvorrichtung eingerichtet, den Rotationseinkoppelspiegel und den Achseinkoppelspiegel kombiniert zu verkippen, bis der zweite Radius der zweiten Kreisbahn den Wert 0 ergibt.

Das optische System ist alternativ oder zusätzlich derart mit einer Steuerungsvorrichtung ausgebildet, wobei die Steuerungsvorrichtung zum Ansteuern des Rotationssystems zum Rotieren um die Rotationsachse ausgebildet ist. Weiterhin ist die Steuerungsvorrichtung ausgebildet, die ersten Mittelpunktskoordinaten der ersten Kreisbahn sowie den zweiten Radius der zweiten Kreisbahn zu bestimmen. Außerdem ist die Steuerungsvorrichtung ausgebildet, eine notwendige Verkippung für den Achseinkoppelspiegel und den Rotationseinkoppelspiegel zu bestimmen, damit die ersten Mittelpunktskoordinaten der Kreisbahn der Reflexionshilfsstrahlprojektion auf dem Winkelsensor denjenigen Koordinaten entsprechen, von denen aus der Hilfsstrahl ausgesandt worden ist und der zweite Radius zu 0 wird. Es ist ersichtlich, dass sich eine erste Formel aufstellen lässt, in der die Auswirkung einer Verkippung des Achseinkoppelspiegels auf die ersten Mittelpunktskoordinaten dargestellt ist. Weiterhin lässt sich eine zweite Formel aufstellen, in der die Auswirkung einer Verkippung des Rotationseinkoppelspiegels auf die Mittelpunktskoordinaten sowie auf die ersten Mittelpunktskoordinaten sowie auf den zweiten Radius darstellbar ist. Zusammen mit dem zweiten Radius sowie den ersten Mittelpunktskoordinaten ist somit ein mathematisches Gleichungssystem mit zwei Gleichungen und zwei Unbekannten vorhanden. Somit existiert genau eine Lösung, nämlich die genannten notwendigen Verkippungen von Achseinkoppelspiegel und Rotationseinkoppelspiegel. Die Steuerungsvorrichtung ist schließlich eingerichtet, den Achseinkoppelspiegel und den Rotationseinkoppelspiegel um die zuvor bestimmten notwendigen Verkippungen zu verkippen. Auf diese Weise erfolgt die Verkippung der einzelnen Spiegel nicht sequenziell, sondern parallel, wodurch ein schnelles und sicheres Ausrichten des Hilfsstrahls und damit auch des Signalstrahls auf die Rotationsachse des Rotationssystems ermöglicht ist.

Besonders vorteilhaft ist die Steuerungsvorrichtung eine Regelvorrichtung, um den Hilfsstrahl auf der Rotationsachse zu halten. Somit ist insbesondere vorgesehen, dass fortlaufend zumindest die ersten Mittelpunktskoordinaten und der zweite Radius bestimmt wird, wobei die Steuerungsvorrichtung eingerichtet ist, eine Verkippung von Achseinkoppelspiegel und Rotationseinkoppelspiegel, sowie insbesondere des Referenzspiegels, fortwährend einer Veränderung der ersten Mittelpunktskoordinaten und/oder des zweiten Radius anzupassen.

Das optische System zeichnet sich vorteilhafterweise dadurch aus, dass das Rotationssystem ein Azimut-Rotationssystem und ein Elevations-Rotationssystem umfasst. Dabei ist das Azimut-Rotationssystem um eine Azimut-Rotationsachse rotierbar, während das Elevations-Rotationssystem um eine, insbesondere zur Azimut-Rotationsachse senkrechten, Elevations-Rotationsachse rotierbar ist. Bevorzugt ist das Azimut-Rotationssystem Teil des Elevations-Rotationssystems, so dass das Azimut-Rotationssystem als Ganzes um die Elevations-Rotationsachse rotierbar ist. Alternativ ist das Elevations-Rotationssystem bevorzugt Teil des Azimut-Rotationssystems, so dass das Elevations-Rotationssystem als Ganzes um die Azimut-Rotationsachse rotierbar ist. Der Achseinkoppelspiegel umfasst einen Azimut-Achseinkoppelspiegel zum Einkoppeln des Signalstrahls und des Hilfsstrahls in das Azimut-Rotationssystem und einen Elevations-Achseinkoppelspiegel zum Einkoppeln des Signalstrahls und des Hilfsstrahls in das Elevations-Rotationssystem. Außerdem ist vorgesehen, dass das Azimut-Rotationssystem einen Azimut-Signalauskoppelspiegel zum Auskoppeln des Signalstrahls aus dem Azimut-Rotationssystem, und insbesondere einen Azimut-Referenzspiegel, umfasst wobei die Azimut-Rotationsachse den Azimut-Achseinkoppelspiegel, den Azimut-Signalauskoppelspiegel und den Azimut-Referenzspiegel vorteilhafterweise schneidet. Ebenso ist vorgesehen, dass das Elevations-Rotationssystem einen Elevations-Signalauskoppelspiegel zum Auskoppeln des Signalstrahls aus dem Elevations-Rotationssystem und insbesondere einen Elevations-Referenzspiegel aufweist, wobei die Elevations-Rotationsachse den Elevations-Achseinkoppelspiegel, den Elevations-Signalauskoppelspiegel und den Elevations-Referenzspiegel vorteilhafterweise schneidet. Somit lässt sich der Signalstrahl vorteilhafterweise auf zwei senkrecht zueinander stehende Achse, die Azimut-Rotationsachse und die Elevations-Rotationsachse, stabilisieren.

Die Erfindung betrifft außerdem ein Verfahren zum Justieren eines Signalstrahls. Insbesondere wird das Verfahren mit dem optischen System wie zuvor beschrieben ausgeführt. Das erfindungsgemäße Verfahren umfasst die folgenden Schritte: zunächst erfolgt ein Verkippen des Referenzspiegels, bis der erste Radius der ersten Kreisbahn der Reflexionshilfsstrahlprojektion auf die Winkelsensoren den Wert 0 ergibt. Auf diese Weise wird der Referenzspiegel derart ausgerichtet, dass die Rotationsachse des Rotationssystems zu dem Referenzspiegel einen Winkel von 90° einnimmt.

Anschließend erfolgt eine Verkippung des Achseinkoppelspiegels, bis die ersten Mittelpunktskoordinaten der Kreisbahn der Reflexionshilfsstrahlprojektion auf dem Winkelsensor denjenigen Koordinaten entsprechen, von denen aus der Hilfsstrahl ausgesandt worden ist. Somit ist eine Winkelabweichung zwischen Hilfsstrahl und Reflexionshilfsstrahl nicht mehr vorhanden, wodurch der Hilfsstrahl und damit auch der Reflexionshilfsstrahl sowie der Signalstrahl parallel zu der Rotationsachse des Rotationssystems ausgerichtet sind. Danach werden der Rotationseinkoppelspiegel und der Achseinkoppelspiegel kombiniert verkippt, bis der zweite Radius der zweiten Kreisbahn den Wert 0 ergibt. Somit erfolgt eine Verschiebung des Hilfsstrahls und damit auch des Signalstrahls auf die Rotationsachse. Eine Rotation des Rotationssystems führt damit bis auf eine Rotation um sich selbst nicht mehr zu einer Veränderung des Signalstrahls. Somit ist der Signalstrahl auf der Rotationsachse stabilisiert.

Alternativ oder zusätzlich umfasst das Verfahren die erfolgenden Schritte: Zunächst erfolgt ein Rotieren des Rotationssystem um die Rotationsachse. Anschließend erfolgt ein Bestimmen der ersten Mittelpunktskoordinaten der ersten Kreisbahn. Danach wird die notwendige Verkippung für den Achseinkoppelspiegel bestimmt, um die ersten Mittelpunktskoordinaten der ersten Kreisbahn der Reflexionshilfsstrahlprojektion auf dem Winkelsensor auf diejenigen Koordinaten abzubilden, von denen aus der Hilfsstrahl ausgesandt worden ist. Somit erfolgt ein Ausrichten des Hilfsstrahls parallel zu der Rotationsachse des Rotationssystems, wobei eine Ausrichtung des Referenzspiegels nicht notwendig ist. Anschließend wird der Achseinkoppelspiegel um die zuvor bestimmte notwendige Verkippung verkippt. Schließlich erfolgt ein kombiniertes Verkippen des Rotationseinkoppelspiegels sowie des Achseinkoppelspiegels, bis der Radius der zweiten Kreisbahn den Wert 0 ergibt.

Schließlich ist bevorzugt vorgesehen, dass das Verfahren die folgenden Schritte umfasst: Wiederum erfolgt zunächst ein Rotieren des Rotationssystem um die Rotationsachse. Anschließend werden die ersten Mittelpunktkoordinaten der ersten Kreisbahn sowie der zweite Radius der zweiten Kreisbahn bestimmt. Aus diesen Parametern lässt sich eine notwendige Verkippung für den Achseinkoppelspiegel und für den Rotationseinkoppelspiegel bestimmen. Bei der notwendigen Verkippung erfolgt ein Verschieben der ersten Mittelpunktskoordinaten der Kreisbahn der Reflexionshilfsstrahlprojektion auf den Winkelsensor auf diejenigen Winkelkoordinaten, aus denen der Hilfsstrahl ausgesandt worden ist. Weiterhin wird der zweite Radius zu 0 gesetzt. Die notwendige Verkippung von Achseinkoppelspiegel und Rotationseinkoppelspiegel, um die genannten Auswirkungen auf die ersten Mittelpunktskoordinaten und auf den zweiten Radius zu erreichen, ist insbesondere wie zuvor beschrieben berechenbar. Als letzter Schritt erfolgt ein Verkippen des Achseinkoppelspiegels und des Rotationseinkoppelspiegels um die bestimmte notwendige Verkippung.

Die Erfindung wird nun anhand eines Ausführungsbeispiels unter Berücksichtigung der beigefügten Zeichnungen im Detail beschrieben. In den Zeichnungen ist:
- Fig. 1: eine schematische Abbildung des optischen Systems gemäß einem Ausführungsbeispiel der Erfindung,
- Fig. 2: eine schematische Abbildung einer Messung des Winkelsensors des optischen Systems gemäß dem Ausführungsbeispiel der Erfindung,
- Fig. 3: eine schematische Abbildung der Messung des Positionsdetektors des optischen Systems gemäß dem Ausführungsbeispiel der Erfindung, und
- Fig. 4: eine schematische Abbildung des optischen Systems gemäß einem alternativen Ausführungsbeispiel der Erfindung.

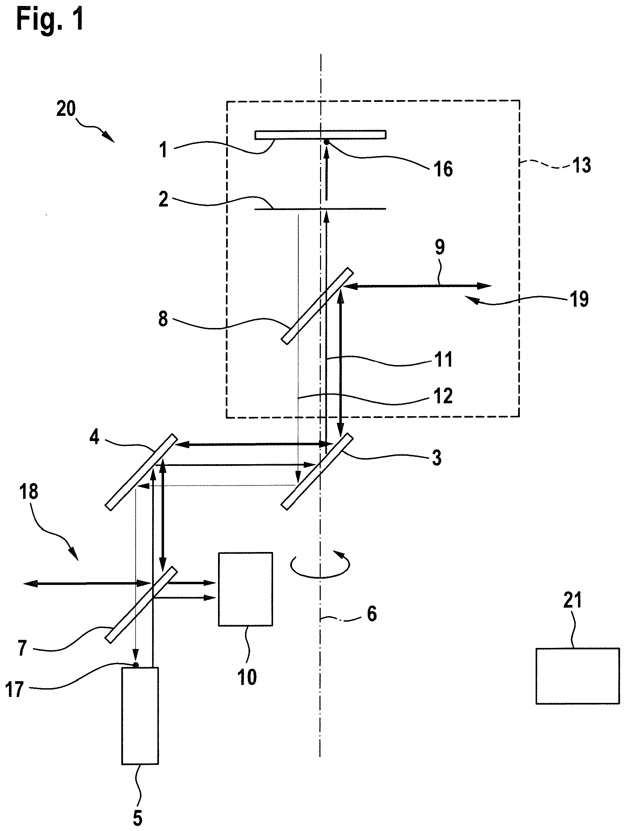

Figur 1 zeigt schematisch ein optisches System 20 gemäß einem Ausführungsbeispiel der Erfindung. Das optische System 20 umfasst ein Rotationssystem 13, wobei das Rotationssystem 13 um eine Rotationsachse 6 rotierbar ist. Es ist Ziel des optischen Systems 20 einen Signalstrahl 9 gerade so über das Rotationssystem 13 zu führen, dass kein lateraler Versatz und kein Winkelfehler bezüglich der Rotationsachse 6 auftreten. Zu diesem Zweck muss der Signalstrahl 9 genau auf der realen, mechanischen Rotationsachse 6 justiert sein. Zum Justieren des Signalstrahls 9 auf die Rotationsachse 6 weist das optische System eine Vielzahl von Spiegeln auf, deren Funktion nachfolgend erklärt wird.

Außerdem ist vorgesehen, dass sich der Signalstrahl 9 von einem Signaleingang 18 des optischen Systems 20 zu einem Signalausgang 19 des optischen Systems 20 erstreckt. Der Signalstrahl 9 kann eine unterschiedliche Art von Strahl sein, insbesondere ein abbildender Strahl oder ein hochenergetischer Strahl, insbesondere ein Laserstrahl.

Von dem Signaleingang 18 gelangt der Signalstrahl 9 auf einen Signaleinkoppelspiegel 7. Der Signaleinkoppelspiegel 7 ist teildurchlässig, wobei ein größerer Anteil des Signalsstrahls 9 von dem Signaleinkoppelspiegel 7 auf einen Rotationseinkoppelspiegel 4 gelenkt wird. Gleichzeitig wird ein geringerer Teil des Signalstrahls 9 durch den Signaleinkoppelspiegel 7 hindurchgeleitet und trifft auf einen optischen Sensor 10.

Weiterhin ist ein Autokollimator 5 vorhanden, wobei der Autokollimator eine Hilfslichtquelle und einen Winkelsensor umfasst. Mit dem Autokollimator als Hilfslichtquelle ist ein Hilfsstrahl 11 aussendbar. Der Hilfsstrahl 11 ist insbesondere ein Laserstrahl. Wiederum ist der Hilfsstrahl 11 teilweise von dem Signaleinkoppelspiegel 7 reflektierbar, sodass ein Teil des Hilfsstrahls 11 auf den optischen Sensor 10 gelangt. Ein weiterer Teil des Hilfsstrahls 11 gelangt durch den Signaleinkoppelspiegel 7 hindurch und verläuft zu dem Rotationseinkoppelspiegel 4.

Über den optischen Sensor 10 lassen sich der Signalstrahl 9 und der Hilfsstrahl 11 vergleichen. Auf diese Weise ist ermöglicht, den Hilfsstrahl 11 in Winkel und Position mit dem Signalstrahl 9 zu synchronisieren. Dies bedeutet, dass in dem Fall, in dem der Hilfsstrahl 11 auf die Rotationsachse 6 justiert wird, der Signalstrahl 9 ebenfalls auf der Rotationsachse 6 justiert ist. Somit funktioniert das Justieren des Signalstrahls 9 unabhängig von der Art des Signalstrahls 9.

Der Rotationseinkoppelspiegel 4 ist verkippbar angeordnet. Somit lässt sich der weitere Verlauf des Signalstrahls 9 und des Hilfsstrahls 11 durch den Rotationseinkoppelspiegel 4 beeinflussen. Von dem Rotationseinkoppelspiegel 4 ist der Signalstrahl 9 und der Hilfsstrahl 11 auf einen Achseinkoppelspiegel 3 leitbar. Der Achseinkoppelspiegel 3 ist wiederum verkippbar angeordnet, sodass ein weiterer Verlauf des Hilfsstrahls 11 und des Signalstrahls 9 von dem Achseinkoppelspiegel 3 beeinflussbar ist.

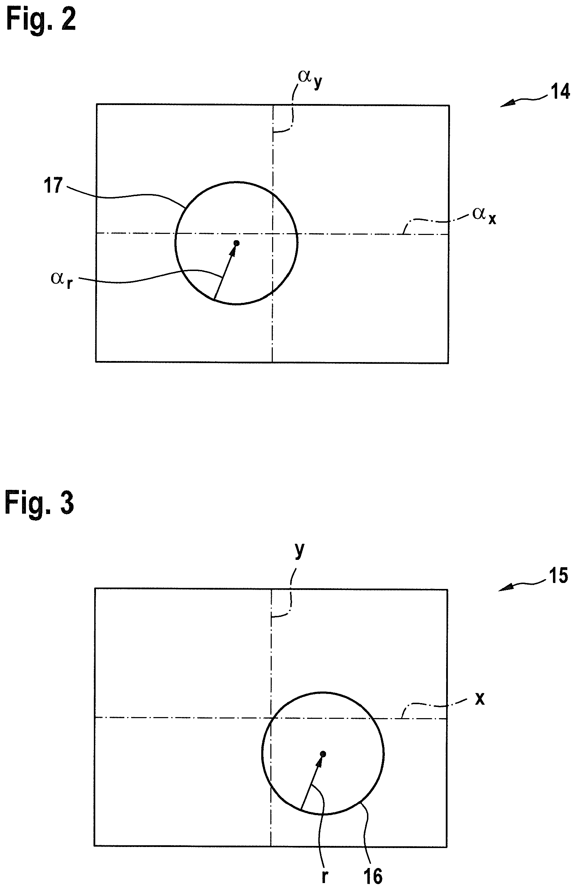

Von dem Achseinkoppelspiegel 3 sind Signalstrahl 9 und Hilfsstrahl 11 auf einen Signalauskoppelspiegel 8 leitbar. Der Signalauskoppelspiegel 8 reflektiert den Signalstrahl 9, während der Hilfsstrahl 11 durch den Signalauskoppelspiegel 8 hindurchgeleitet wird. Von dem Signalauskoppelspiegel 8 gelangt der Signalstrahl 9 zu dem Signalausgang 19 des optischen Systems 20. Der Hilfsstrahl 11 gelangt zu einem Referenzspiegel 2, wobei der Referenzspiegel 2 einen Teil des Hilfsstrahls 11 rückreflektiert. Auf diese Weise entsteht der Reflektionshilfsstrahl 12, der aufgrund der Rückreflektion über den gleichen optischen Weg wie der Hilfsstrahl 11 verläuft. Somit gelangt der Reflexionshilfsstrahl 12 auf den Autokollimator 5, insbesondere auf den Winkelsensor des Autokollimators 5. Auf dem Winkelsensor entsteht daher die Reflexionshilfsstrahlprojektion 17, die nachfolgend mit Bezug auf Figur 2 erklärt wird.

Der Teil des Hilfsstrahls 11, der von dem Referenzspiegel 2 nicht rückreflektiert wird, gelangt durch den Referenzspiegel 2 auf einen Positionsdetektor 1. Auf dem Positionsdetektor 1 entsteht somit eine Hilfsstrahlprojektion 16 des Hilfsstrahls 11.

Das Rotationssystem 13 umfasst den Signalauskoppelspiegel 8, den Referenzspiegel 2 und den Positionsdetektor 1. Alle diese Komponenten werden von der Rotationsachse 6 geschnitten. Auch sind alle diese Komponenten rotierbar um die Rotationsachse 6 angeordnet.

Anhand des Winkelsensors des Autokollimators 5 lässt sich eine Winkelabweichung zwischen dem Hilfsstrahl 11 und dem Reflexionshilfsstrahl 12 bestimmen. Eine erste Messabbildung 14 des Winkelsensors des Autokollimators 5 ist in Figur 2 dargestellt. In der ersten Messabbildung 14 ist eine erste Kreisbahn dargestellt, die Reflexionshilfsstrahlprojektion 17 auf dem Winkelsensor des Autokollimators 5 ausführt, wenn das Rotationssystem 13 rotiert wird. Die erste Kreisbahn weist einen ersten Radius αᵣ sowie erste Mittelpunktskoordinaten αₓ, α_{y} auf. Der erste Radius αᵣ der ersten Kreisbahn kommt dadurch zustanden, dass der Referenzspiegel 2 nicht exakt senkrecht zu der Rotationsachse 6 ausgerichtet ist. Somit kann durch eine Verkippung des Referenzspiegels 2 der erste Radius αᵣ beeinflusst werden. Die erste Mittelpunktskoordinaten αₓ, α_{y} des Mittelpunkts der Kreisbahn der Reflexionshilfsstrahlprojektion 17 lassen sich durch den Achseinkoppelspiegel 3 beeinflussen. In dem in Figur 2 gezeigten ersten Messfeld 14 deuten die Ursprungskoordinaten auf denjenigen Punkt hin, von dem der Hilfsstrahl 11 ausgesandt wurde. Werden der Referenzspiegel 2 und der Achseinkoppelspiegel 3 solange verkippt, bis der erste Radius αᵣ den Wert 0 ergibt und die ersten Mittelpunktskoordinaten αₓ, α_{y} bei der ersten Kreisbahn in den Ursprung des ersten Messfelds 14 liegen, so ist der Hilfsstrahl 11 und damit auch der Signalstrahl 9 parallel zu der Rotationsachse 6 ausgerichtet. Dabei ist vorteilhaft, dass der erste Radius αᵣ der ersten Kreisbahn und nur durch eine Verkippung des Referenzspiegels 2 beeinflussbar ist, während die ersten Mittelpunktskoordinaten αₓ, α_{y} der ersten Kreisbahn nur durch Verkippung des Achseinkoppelspiegels 3 beeinflussbar sind. Somit sind diese Parameter unabhängig voneinander einstellbar.

Wurde der Signalstrahl 9 und der Hilfsstrahl 11 wie zuvor beschrieben eingestellt, so ergibt sich eine Messung wie in dem zweiten Messfeld 15 in Figur 3 dargestellt ist. Das zweite Messfeld 15 zeigt den Verlauf der Hilfsstrahlprojektion 16 des Hilfsstrahls 11 auf den Positionsdetektor 1, wenn das Rotationssystem 13 rotiert wird. Befindet sich der Hilfsstrahl 11 und damit der Signalstrahl 9 nicht unmittelbar auf der Rotationsachse 6, so beschreibt die Hilfsstrahlprojektion 16 eine zweite Kreisbahn, um die Rotationsachse 6. Die zweite Kreisbahn weist einen zweiten Radius r sowie zweite Mittelpunktskoordinaten x, y auf. Über gemeinsames Verkippen des Rotationseinkoppelspiegels 4 und des Achseinkoppelspiegels 3 ist der zweite Radius r der zweiten Kreisbahn beeinflussbar. Somit lässt sich durch gemeinsames Verkippen von Achseinkoppelspiegel 3 und Rotationseinkoppelspiegel 4 der Hilfsstrahl 11 und damit der Signalstrahl 9 parallel zu der Rotationsachse 6 verschieben. Auf diese Weise ist der Signalstrahl 9 auf die Rotationsachse 6 justierbar.

Das optische System 20 weist bevorzugt außerdem eine Steuerungsvorrichtung 21 auf. Die Steuerungsvorrichtung 21 ist insbesondere eine Regelvorrichtung, die fortlaufend die Winkelabweichung zwischen Hilfsstrahl 11 und Reflexionshilfsstrahl 12 mittels des Autokollimators 5 sowie die Position der Hilfsstrahlprojektion 16 mittels des Positionssensors 1 bestimmt und eine Verkippung von Achseinkoppelspiegel 3 und Rotationseinkoppelspiegel 4, sowie insbesondere des Referenzspiegels 2, anpasst, um den Hilfsstrahl 11 und damit den Signalstrahl 9 auf der Rotationsachse 6 zu halten.

Zuvor wurde beschrieben, wie die Verkippung von Referenzspiegel 2, Achseinkoppelspiegel 3 und Rotationseinkoppelspiegel 4 sequenziell erfolgt. Vorteilhafterweise können die Verkippungen dieser Spiegel zusammengefasst werden, sodass ein zumindest teilweises paralleles Justieren des Hilfsstrahls 11 und damit des Signalstrahls 9 auf der Rotationsachse 6 erfolgt.

So kann das Rotationssystem 13 um die Rotationsachse 6 rotiert werden, um die in Figur 2 dargestellte Messung zu erhalten. Anhand der ersten Mittelpunktskoordinaten αₓ, α_{y} lässt sich eine notwendige Verkippung des Achseinkoppelspiegels 3 berechnen, bei der sich der erste Kreismittelpunkt auf den Ursprung der in Figur 2 gezeigten ersten Messabbildung 14 verschiebt. Somit lässt sich eine Verkippung des Achseinkoppelspiegels 3 bestimmen, ohne dass zuvor der Referenzspiegel 2 exakt ausgerichtet werden muss, das bedeutet ohne dass der Referenzspiegel 2 senkrecht zu der Rotationsachse 6 stehen muss, wodurch der erste Radius αᵣ zu 0 werden würde. Die gemeinsame Einstellung von Achseinkoppelspiegel 3 und Rotationseinkoppelspiegel 4 zur Verschiebung des Hilfsstrahls 11 und des Signalstrahls 9 parallel zur Rotationsachse 6 erfolgt analog wie oben beschrieben.

In einer weiteren besonderen Ansteuerungsmöglichkeit lässt sich nach einer Rotation des Rotationssystems 13, bei der die in Figur 2 und Figur 3 abgebildeten Messungabbildungen 14, 15 entstehen, der zweite Radius r der zweiten Kreisbahn sowie die ersten Mittelpunktskoordinaten αₓ, α_{y} der ersten Kreisbahn bestimmen. Außerdem lässt sich jeweils eine Formel aufstellen, welchen Einfluss auf die ersten Mittelpunktskoordinaten αₓ, α_{y} und / oder auf den zweiten Radius r eine Verkippung entweder des Achseinkoppelspiegels 3 oder des Rotationseinkoppelspiegels 4 hat. Zusammen mit den ersten Mittelpunktskoordinaten αₓ, α_{y} sowie dem zweiten Radius r ist somit ein Gleichungssystem mit zwei Gleichungen und mit zwei Unbekannten vorhanden. Dieses Gleichungssystem lässt sich mathematisch eindeutig lösen, wodurch die notwendige Verkippung von dem Achseinkoppelspiegel 3 und dem Rotationseinkoppelspiegel 4 berechenbar ist. Somit kann ein Verkippen von Achseinkoppelspiegel 3 und Rotationseinkoppelspiegel 4 parallel erfolgen. Auf diese Weise ist insbesondere vorgesehen, dass der Hilfsstrahl 11 und damit der Signalstrahl 9 fortwährend nachgeführt werden, sodass der Hilfsstrahl 11 und damit der Signalstrahl 9 fortwährend auf der Rotationsachse 6 gehalten werden. Somit ist keine Abweichung des Signalstrahls 9 vorhanden, obwohl dieser durch das Rotationssystem 13 geleitet wird.

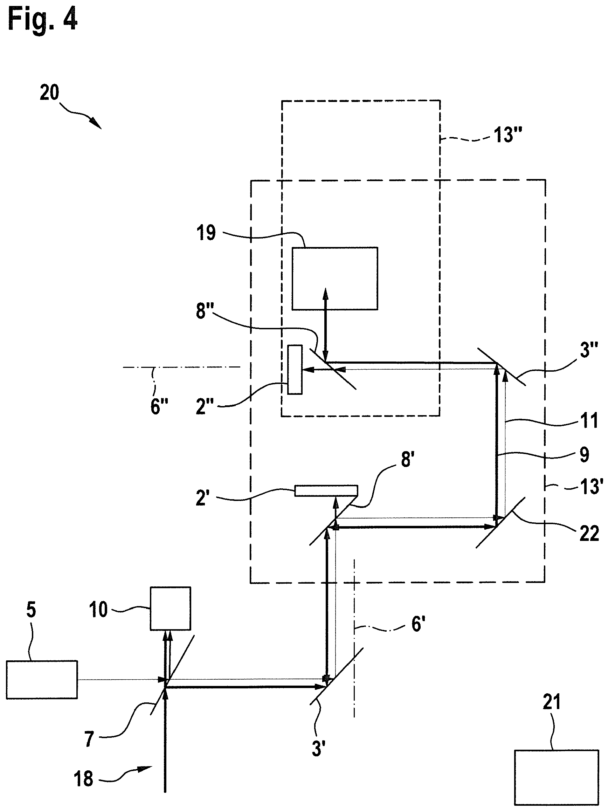

Figur 4 zeigt schließlich ein alternatives Ausführungsbeispiel des optischen Systems 20. Dabei zeigen Elemente mit denselben Bezugszeichen wie in Figur 1 äquivalente Bauteile wie in Figur 1.

In dem alternativen Ausführungsbeispiel weist das optische System 20 ein Azimut-Rotationssystem 13' und ein Elevations-Rotationssystem 13" auf. Dabei ist eine Azimut-Rotationsachse 6' des Azimut-Rotationssystems 13' senkrecht zu einer Elevations-Rotationachse 6" des Elevations-Rotationssystems 13" orientiert. Somit umfasst das optische System 20 in vorteilhafter Weise einen Coudé-Strahlengang. Der Signalstrahl 9 ist somit in zwei Raumrichtungen unabhängig voneinander richtbar und dabei über bezüglich beider Rotationsachsen stabilisierbar.

Das Azimut-Rotationssystem 13' weist einen Azimut-Signalauskoppelspiegel 8' und einen Azimut-Referenzspiegel 2' auf. Somit ist das Azimut-Rotationssystem 13' identisch wie das Rotationssystem 13 aufgebaut. Ebenso weist das Elevations-Rotationssystem 13"einen Elevations-Signalauskoppelspiegel 8" und einen Elevations-Referenzspiegel 2" auf. Somit ist das auch das Elevations-Rotationssystem 13" identisch wie das Rotationssystem 13 aufgebaut. Über einen Azimut-Achseinkoppelspiegel 3' ist der Signalstrahl 9 in das Azimut-Rotationssystem 13' einkoppelbar, während der Signalstrahl 9 über einen Elevations-Achseinkoppelspiegel 3" in das Elevations-Rotationssystem 13" einkoppelbar ist. Dabei ist vorgesehen, dass der Signalstrahl 9 von dem Azimut-Signalauskoppelspiegel 8' auf einen Umlenkspiegel 22 lenkbar ist, wobei der Signalstrahl 9 von dem Umlenkspiegel 22 auf den Elevations-Achseinkoppelspiegel 3" lenkbar ist. Der Elevations-Achsauskoppelspiegel 8" lenkt den Signalstrahl auf den Signalausgang 19, der in Figur 2 als weiteres optisches System dargestellt ist.

Insbesondere sind alle Elemente außerhalb des Azimut-Rotationssystems 13' und des Elevations-Rotationssystems 13" identisch zu dem in Figur 1 gezeigten Ausführungsbeispiel. Es wird lediglich auf den Rotationseinkoppelspiegel 4 verzichtet. Außerdem sind in Figur 4 die jeweiligen Rückreflektionen des Hilfsstrahls 11 durch den Azimut-Referenzspiegel 2' und den Elevations-Referenzspiegel 2" nicht gezeigt.

Das in Figur 4 dargestellte optische System erlaubt somit eine Stabilisierung des Signalstrahls 9 sowohl bezüglich der Azimut-Rotationsachse 6' als auch der Elevations-Rotationsachse 6". Dabei erfolgt die jeweilige Stabilisierung analog zu der beschriebenen Stabilisierung durch das Rotationssystem 13.

In dem in Figur 4 dargestelltem Ausführungsbeispiel ist sowohl ein Azimut-Referenzspiegel 2' als auch ein Elevations-Referenzspiegel 2" vorhanden. Dabei ist insbesondere vorgesehen, dass sowohl dem Azimut-Referenzspiegel 2' als auch dem Elevations-Referenzspiegel 2" jeweils ein Positionssensor (nicht gezeigt) zugeordnet ist. Somit lässt sich eine Stabilisierung in Azimut und Elevation unabhängig voneinander ausführen. Alternativ sind bevorzugt nur ein einziger Referenzspiegel und ein einziger Positionssensor vorhanden. Diese sind insbesondere Teil desjenigen Rotationssystems, das der Signalstrahl 9 als letztes erreicht, in dem in Figur 4 gezeigten Ausführungsbeispiel somit des Elevations-Rotationssystems 13".

Soll eine Justierung des Signalstrahls 9 sowohl auf die Azimut-Rotationsachse 6' als auch auf die Elevations-Rotationsachse 6"erfolgen, so ist bei Verwendung von lediglich einem Referenzspiegel und Positionssensor jeweils eines der Rotationssysteme festzustellen. Die Justage erfolgt dann bezüglich der rotierten Achse durch Verkippen der zugehörigen Achseinkoppel-, Signaleinkoppel- bzw. Rotationseinkoppelspiegel.

Soll die Stabilisierung des Signalstrahls 9 in Echtzeit bei gleichzeitiger Rotation um beide Achsen erfolgen, so entstehen durch Nutzung nur eines Referenzspiegels und nur einem Positionsdetektor am Ende der Rotationskette lediglich bei den einzelnen Rotationsachsen Abweichungen. Der Signalstrahl 9 ist aber nach Verlassen des Elevations-Rotationssystems 13", d.h. nach der Reflektion durch den Elevations-Signalauskoppelspiegel 8", präzise auf die sich aus dem momentanen Azimutdrehwinkel und dem momentanten Elevationsdrehwinkel ergebene Ausgangsachse stabilisiert. Damit ist der Signalstrahl nach dem Signalauskoppelspiegel 8" in Winkel und Positions bezüglich beider Rotationsachsen stabilisiert. Dabei können entweder die Einkoppelspiegel vor dem Azimutsystem, d.h. Signaleinkoppelspiegel 7 und Achseinkoppelspiegel 3' oder die Einkoppelspiegel vor dem Elevationssystem, d.h. Umlenkspiegel 22 und Elevationsachseinkoppelspiegel 3" für die Stabilisierung verwendet werden.

In einer alternativen Ausführungsform ist außerdem vorgesehen, dass zumindest drei Rotationssysteme vorhanden sind. Dabei sind die Rotationssysteme analog zu dem zuvor beschriebenen Ausführungsbeispiel ineinander verschachtelt. Dabei ist vorgesehen, dass entweder jedes Rotationssystem einen eigenen Referenzspiegel sowie einen eigenen Positionssensor aufweist, oder alternativ ein einziger Referenzspiegel 2 und einziger Positionssensor 1 vorhanden ist. In letzterem Fall ist insbesondere vorgesehen, dass sich der Referenzspiegel 2 und der Positionssensor 1 hinter dem letzten Rotationssystem befindet, das der Signalstrahl 9 durchläuft, bevor der Signalstrahl das optische System 20 verlässt.

Sind zumindest drei Rotationssysteme vorhanden, so werden Korrekturen vorteilhafterweise durch das Verkippen der jeweiligen Einkoppelspiegel der ersten beiden Rotationssysteme vorgenommen, die der Signalstrahl 9 beim Durchqueren des optischen Systems 20 durchläuft. Alternativ können die Korrekturen durch beliebige Einkoppelspiegel der einzelnen Rotationssysteme erfolgen. In diesem Fall wird lediglich der Summenfehler am Ende der Rotationssysteme ausgeglichen, so dass der Signalstrahl 9 lediglich nach Verlassen des optischen Systems 20 stabilisiert ist, nicht jedoch bezüglich der einzelnen Achsen der Rotatiossysteme.

Werden mindestens drei Rotationssysteme verwendet, so ergeben sich folgende Abweichungen zu den zuvor beschriebenen Ausführungsformen:
- der Referenzspiegel 2 und der Positionssensor 1 werden nicht mehr von der jeweiligen Rotationsachse 6 geschnitten;
- der Referenzspiegel 2 und der Positionssensor 1 stehen nach einer möglichen Verkippung des Referenzspiegels 2, um, wie zuvor beschrieben, den Radius der ersten Kreisbahn α eher zu Null zu justieren, nicht notwendigerweise senkrecht zu der entsprechenden Rotationsachse 6. Dennoch ist durch die Justage der Summenfehler aller vorherigen Rotationsachsen 6 ausgeglichen;
- analog gilt für den Positionsdetektor, dass in dem Fall, in dem der Radius der ersten Kreisbahn α eher zu Null geregelt ist, der Summenpositionsfehler aller vorherigen Rotationsachse 6 Null ergibt.

Die Erfindung beschreibt somit ein einfaches und schnelles Verfahren sowie eine Vorrichtung, mit der einfach und schnell ein optischer Strahlengang auf eine mechanische Rotationsachse justiert und/oder stabilisiert werden kann. Ein besonderer Vorzug der Erfindung ist, dass keine externen Referenzen notwendig sind, sodass keines der verwendeten Elemente hochpräzise vorpositioniert werden muss. Auch muss die reale mechanische Rotationsachse nicht genau bekannt sein. Ein weiterer Vorteil besteht in der Möglichkeit, dass diese Justage zur Stabilisierung in Echtzeit geregelt ausgeführt werden kann, womit insbesondere mechanische Ungenauigkeiten wirksam ausgeglichen werden können.

Neben der vorstehenden schriftlichen Beschreibung der Erfindung wird zu deren ergänzender Offenbarung hiermit explizit auf die zeichnerische Darstellung der Erfindung in den Fig. 1 bis 3 Bezug genommen.

### Bezugszeichenliste

- 1: Positionssensor
- 2: Referenzspiegel
- 2': Azimut-Referenzspiegel
- 2": Elevations-Referenzspiegel
- 3: Achseinkoppelspiegel
- 3': Azimut-Achseinkoppelspiegel
- 3": Elevations-Achseinkoppelspiegel
- 4: Rotationseinkoppelspiegel
- 5: Autokollimator
- 6: Rotationsachse
- 6': Azimut-Rotationsachse
- 6": Elevations-Rotationsachse
- 7: Signaleinkoppelspiegel
- 8: Signalauskoppelspiegel
- 8': Azimut-Signalauskoppelspiegel
- 8": Elevations-Signalauskoppelspiegel
- 9: Signalstrahl
- 10: Optischer Sensor
- 11: Hilfsstrahl
- 12: Reflexionshilfsstrahl
- 13: Rotationssystem
- 13': Azimut-Rotationssystem
- 13": Elevations-Rotationssystem
- 14: Erste Messabbildung
- 15: Zweite Messabbildung
- 16: Hilfsstrahlprojektion
- 17: Reflexionshilfsstrahlprojektion
- 18: Signaleingang
- 19: Signalausgang
- 20: Optisches System
- 21: Steuerungsvorrichtung
- 22: Umlenkspiegel
- αₓ, α_{y}: Mittelpunktkoordinaten der ersten Kreisbahn
- αᵣ: Radius der ersten Kreisbahn
- x, y: zweite Mittelpunktkoordinaten der zweiten Kreisbahn
- r: zweiter Radius der zweiten Kreisbahn

## Patentansprüche

1. Optisches System (20), umfassend
- einen Signaleingang (18) zum Aufnehmen eines Signalstrahls (9),
- einen Signalausgang (19) zum Ausgeben des Signalstrahls (9),
- eine Hilfslichtquelle zum Aussenden eines Hilfsstrahls (11), wobei der Hilfsstrahl (11) in Winkel und Position zu dem Signalstrahl (9) synchron ist,
- ein Rotationssystem (13), wobei das Rotationssystem (13) um eine Rotationsachse (6) rotierbar ist, und
- einen Achseinkoppelspiegel (3) zum Einkoppeln des Signalstrahls (9) und des Hilfsstrahls (11) in das Rotationssystem (13),
- wobei das Rotationssystem (13) aufweist:
o einen Signalauskoppelspiegel (8) zum Auskoppeln des Signalstrahls (9) aus dem Rotationssystem (13),
o einen Referenzspiegel (2), und
o einen Positionsdetektor (1) zum Detektieren einer Hilfsstrahlprojektion (16) des Hilfsstrahls (11),
- wobei der Signalstrahl (9) von dem Signaleingang (18) über den Achseinkoppelspiegel (3) zu dem Signalauskoppelspiegel (8) lenkbar ist, und der Hilfsstrahl (11) über den Achseinkoppelspiegel (3) durch den Signalauskoppelspiegel (8) auf den Referenzspiegel (2) lenkbar ist, wobei von dem Referenzspiegel (2) der Hilfsstrahl (11) zumindest teilweise zu einem Reflexionshilfsstrahl (12) rückreflecktierbar ist,
- wobei das optische System (20) ferner einen Winkelsensor umfasst, über den eine Winkelabweichung zwischen dem Hilfsstrahl (11) und dem Reflexionsshilfsstrahl (12) erfassbar ist,
- wobei der Achseinkoppelspiegel (3) und der Referenzspiegel (2) verkippbar sind, um anhand der gemessenen Winkelabweichung den Signalstrahl (9) parallel zu der Rotationsachse (6) auszurichten,
**dadurch gekennzeichnet, dass**
- die Hilfsstrahlprojektion (16) eine zweite Kreisbahn beschreibt, wenn der Hilfsstrahl (11) parallel zu der Rotationsachse (6) ausgerichtet ist und die Rotationsvorrichtung (13) rotiert, und
- eine Reflexionshilfsstrahlprojektion (17) auf dem Winkelsensor eine erste Kreisbahn beschreibt, wenn das Rotationssystem (13) rotiert, wobei durch ein Verkippen des Reflexionsspiegels (2) ein erster Radius (α*ᵣ*) der ersten Kreisbahn und durch Verkippen des Achseinkoppelspiegels (3) erste Mittelpunktkoordinaten (α*ₓ*, α*_{y}*) der ersten Kreisbahn beeinflussbar sind.

2. Optisches System (20) nach Anspruch 1, **dadurch gekennzeichnet, dass** der Winkelsensor und die Hilfslichtquelle in einer Vorrichtung, insbesondere in einem Autokollimator (5), zusammengefasst sind.

3. Optisches System (20) nach einem der vorhergehenden Ansprüche, **gekennzeichnet durch** einen Signaleinkoppelspiegel (7),
- wobei der Signalstrahl (9) von dem Signaleingang (18) teilweise über den Signaleinkoppelspiegel (7) zu dem Achseinkoppelspiegel (3) und teilweise durch den Signaleinkoppelspiegel (7) hindurch zu einem optischen Sensor (10) leitbar ist, und
- wobei der Hilfsstrahl (11) von der Hilfslichtquelle teilweise über den Signaleinkoppelspiegel (7) zu dem optischen Sensor (10) und teilweise durch den Signaleinkoppelspiegel (7) hindurch zu dem Achseinkoppelspiegel (3) leitbar ist, und
- wobei anhand von Messdaten des optischen Sensors (10) der Hilfsstrahl (11) und der Signalstrahl (9) in Winkel und Position synchronisierbar sind.

4. Optisches System (20) nach einem der vorhergehenden Ansprüche, **gekennzeichnet durch** einen Rotationseinkoppelspiegel (4), wobei der Signalstrahl (9) und der Hilfsstrahl (10) über den Rotaionseinkoppelspiegel (4) in das Rotationssystem (13) einkoppelbar sind, insbesondere auf den Achseinkoppelspiegel (3) lenkbar sind.

5. Optisches System (20) nach Anspruch 4, **dadurch gekennzeichnet, dass**
- von dem Referenzspiegel (2) der Hilfsstrahl (11) teilweise zu dem Reflexionshilfsstrahls (12) rückreflecktierbar ist und teilweise durch den Referenzspiegel (2) zur Abbildung der Hilfsstrahlprojektion (16) auf den Positionsdetektor (1) leitbar ist, und
wobei durch Verkippen des Rotationseinkoppelspiegels (4) ein zweiter Radius (r) der zweiten Kreisbahn beeinflussbar ist.

6. Optisches System (20) nach einem der vorhergehenden Ansprüche, **dadurch gekennzeichnet, dass** Hilfslichtquelle eine Laserlichtquelle ist.

7. Optisches System (20) nach einem der vorhergehenden Ansprüche, **gekennzeichnet durch** eine Steuerungsvorrichtung (21), wobei die Steuerungsvorrichtung (21) eingerichtet ist,
- den Referenzspiegel (8) zu verkippen, bis der erste Radius (α*ᵣ*) der ersten Kreisbahn der Reflexionshilfsstrahlprojektion (17) auf dem Winkelsensor den Wert Null ergibt,
- den Achseinkoppelspiegel (3) zu verkippen, bis die ersten Mittelpunktskoordinaten (α*ₓ*, α*_{y}*) der ersten Kreisbahn der Reflexionshilfsstrahlprojektion (17) auf dem Winkelsensor denjenigen Koordinaten entsprechen, von denen aus der Hilfsstrahl (11) ausgesandt worden ist, und
- den Rotationseinkoppelspiegel (4) und den Achseinkoppelspiegel (3) kombiniert zu verkippen, bis der zweite Radius (r) der zweiten Kreisbahn den Wert Null ergibt.

8. Optisches System (20) nach einem der vorhergehenden Ansprüche, **gekennzeichnet durch** eine Steuerungsvorrichtung (21), wobei die Steuerungsvorrichtung (21) eingerichtet ist,
- das Rotationssystem (13) zum Rotieren um die Rotationsachse (6) anzusteuern,
- die ersten Mittelpunktkoordinaten (α*ₓ*, α*_{y}*) der ersten Kreisbahn zu bestimmen,
- eine notwendigen Verkippung für den Achseinkoppelspiegel (3) zu bestimmen, damit die Mittelpunktskoordinaten (α*ₓ*, α*_{y}*) der ersten Kreisbahn der Reflexionshilfsstrahlprojektion (17) auf dem Winkelsensor denjenigen Koordinaten entsprechen, von denen aus der Hilfsstrahl (11) ausgesandt worden ist,
- den Achseinkoppelspiegel (3) um die notwendigen Verkippung zu verkippen, und
- den Rotationseinkoppelspiegel (4) und den Achseinkoppelspiegel (3) kombiniert zu verkippen, bis der zweite Radius (r) der zweiten Kreisbahn den Wert Null ergibt.

9. Optisches System (20) nach einem der vorhergehenden Ansprüche, **gekennzeichnet durch** eine Steuerungsvorrichtung (21), wobei die Steuerungsvorrichtung (21) eingerichtet ist,
- das Rotationssystem (13) zum Rotieren um die Rotationsachse (6) anzusteuern,
- die ersten Mittelpunktkoordinaten (α*ₓ*, α*_{y}*) der ersten Kreisbahn, sowie den zweiten Radius (r) der zweiten Kreisbahn zu bestimmen,
- eine notwendigen Verkippung für den Achseinkoppelspiegel (3) und den Rotationseinkoppelspiegel (4) zu bestimmen, damit die ersten Mittelpunktskoordinaten (α*ₓ*, α*_{y}*) der ersten Kreisbahn der Reflexionshilfsstrahlprojektion (17) auf dem Winkelsensor denjenigen Koordinaten entsprechen, von denen aus der Hilfsstrahl (11) ausgesandt worden ist und der zweite Radius (r) zu null wird, und
- den Achseinkoppelspiegel (3) und den Rotationseinkoppelspiegel (4) um die notwendigen Verkippung zu verkippen.

10. Optisches System (20) nach einem der vorhergehenden Ansprüche, **gekennzeichnet durch** eine Steuerungsvorrichtung (21), wobei die Steuerungsvorrichtung (21) eine Regelvorrichtung ist, um den Hilfsstrahl (10) auf der Rotationsachse (6) zu halten.

11. Optisches System (20) nach einem der vorhergehenden Ansprüche, **dadurch gekennzeichnet, dass** das Rotationssystem (13) ein Azimut-Rotationssystem (13') und ein Elevations-Rotationssystem (13") umfasst,
- wobei das Azimut-Rotationssystem (13') um eine Azimut-Rotationsachse (6') rotierbar ist,
- wobei das Elevations-Rotationssystem (13") um eine, insbesondere zur Azimut-Rotationsachse (6') senkrechten, Elevations-Rotationsachse (6") rotierbar ist,
- wobei der Achseinkoppelspiegel (3) einen Azimut-Achseinkoppelspiegel (3') zum Einkoppeln des Signalstrahls (9) und des Hilfsstrahls (11) in das Azimut-Rotationssystem (13') und einen Elevations-Achseinkoppelspiegel (3") zum Einkoppeln des Signalstrahls (9) und des Hilfsstrahls (11) in das Elevations-Rotationssystem (13") umfasst,
- wobei das Azimut-Rotationssystem (13') aufweist:
o einen Azimut-Signalauskoppelspiegel (8') zum Auskoppeln des Signalstrahls (9) aus dem Azimut-Rotationssystem (13'), und
- wobei das Elevations-Rotationssystem (13") aufweist:
o einen Elevations-Signalauskoppelspiegel (8") zum Auskoppeln des Signalstrahls (9) aus dem Elevations-Rotationssystem (13").

12. Verfahren zum Justieren eines Signalstrahls (9) mit einem optischen System (20) nach einem der Ansprüche 1 bis 11, **gekennzeichnet durch** die Schritte:
- Verkippen des Referenzspiegels (2), bis der erste Radius (α*ᵣ*) der ersten Kreisbahn der Reflexionshilfsstrahlprojektion (17) auf dem Winkelsensor den Wert Null ergibt,
- Verkippen des Achseinkoppelspiegels (3), bis die ersten Mittelpunktskoordinaten (α*ₓ*, α*_{y}*) der Kreisbahn der Reflexionshilfsstrahlprojektion (17) auf dem Winkelsensor denjenigen Koordinaten entsprechen, von denen aus der Hilfsstrahl (11) ausgesandt worden ist, und
- kombiniertes Verkippen des Rotationseinkoppelspiegels (4) und des Achseinkoppelspiegels (3), bis der zweite Radius (r) der zweiten Kreisbahn den Wert Null ergibt.

13. Verfahren nach Anspruch 12, **gekennzeichnet durch** die Schritte:
- Rotieren des Rotationssystems (13) um die Rotationsachse (6),
- Bestimmen der ersten Mittelpunktkoordinaten (α*ₓ*, α*_{y}*) der ersten Kreisbahn,
- Bestimmen einer notwendigen Verkippung für den Achseinkoppelspiegel (3), damit die ersten Mittelpunktskoordinaten (α*ₓ*, α*_{y}*) der ersten Kreisbahn der Reflexionshilfsstrahlprojektion (17) auf dem Winkelsensor denjenigen Koordinaten entsprechen, von denen aus der Hilfsstrahl (11) ausgesandt worden ist,
- Verkippen des Achseinkoppelspiegel (3) um die notwendigen Verkippung, und
- kombiniertes Verkippen des Rotationseinkoppelspiegels (4) und des Achseinkoppelspiegels (3), bis der zweite Radius (r) der zweiten Kreisbahn den Wert Null ergibt.

14. Verfahren nach Anspruch 12 oder 13, **gekennzeichnet durch** die Schritte:
- Rotieren des Rotationssystems (13) um die Rotationsachse (6),
- Bestimmen der ersten Mittelpunktkoordinaten (α*ₓ*, α*_{y}*) der ersten Kreisbahn, sowie des zweiten Radius (r) der zweiten Kreisbahn,
- Bestimmen einer notwendigen Verkippung für den Achseinkoppelspiegel (3) und den Rotationseinkoppelspiegel (4), damit die ersten Mittelpunktskoordinaten (α*ₓ*, α*_{y}*) der Kreisbahn der Reflexionshilfsstrahlprojektion (17) auf dem Winkelsensor denjenigen Koordinaten entsprechen, von denen aus der Hilfsstrahl (11) ausgesandt worden ist und der zweite Radius (r) zu null wird, und
- Verkippen des Achseinkoppelspiegels (3) und des Rotationseinkoppelspiegels (4) um die notwendige Verkippung.

## Claims

1. Optical system (20), comprising
- a signal input (18) for receiving a signal beam (9),
- a signal output (19) for outputting the signal beam (9),
- an auxiliary light source for emitting an auxiliary beam (11), the auxiliary beam (11) being synchronous with the signal beam (9) in angle and position,
- a rotation system (13), the rotation system (13) being rotatable about an axis of rotation (6), and
- an axial feed-in mirror (3) for feeding the signal beam (9) and the auxiliary beam (11) into the rotation system (13),
- the rotation system (13) having:
∘ a signal feed-out mirror (8) for feeding the signal beam (9) out of the rotation system (13),
∘ a reference mirror (2), and
∘ a position detector (1) for detecting an auxiliary beam projection (16) of the auxiliary beam (11),
- the signal beam (9) being deflectable from the signal input (18) via the axial feed-in mirror (3) to the signal feed-out mirror (8), and the auxiliary beam (11) being deflectable via the axial feed-in mirror (3) through the signal feed-out mirror (8) onto the reference mirror (2), the auxiliary beam (11) being reflectable back from the reference mirror (2) at least in part to form a reflected auxiliary beam (12),
- the optical system (20) further comprising an angle sensor, by way of which an angular deviation between the auxiliary beam (11) and the reflected auxiliary beam (12) can be detected,
- the axial feed-in mirror (3) and the reference mirror (2) being tiltable so as to orientate the signal beam (9) parallel to the axis of rotation (6) using the measured angular deviation,
**characterised in that**
- the auxiliary beam projection (16) describes a second circular path when the auxiliary beam (11) is orientated parallel to the axis of rotation (6) and the rotation device (13) is rotating, and
- a reflected auxiliary beam projection (17) on the angle sensor describes a first circular path when the rotation system (13) is rotating, it being possible to influence a first radius (αᵣ) of the first circular path by tilting the reflection mirror (2) and first centre point coordinates (αₓ, α_{y}) of the first circular path by tilting the axial feed-in mirror (3).

2. Optical system (20) according to claim 1, **characterised in that** the angle sensor and the auxiliary light source are combined in a device, in particular in an autocollimator (5).

3. Optical system (20) according to any of the preceding claims, **characterised by** a signal feed-in mirror (7),
- the signal beam (9) from the signal input (18) being passable via the signal feed-in mirror (7) to the axial feed-in mirror (3) in part and through the signal feed-in mirror (7) to an optical sensor (10) in part, and
- the auxiliary beam (11) from the auxiliary light source being passable via the signal feed-in mirror (7) to the optical sensor (10) in part and through the signal feed-in mirror (7) to the axial feed-in mirror (3) in part, and
- the auxiliary beam (11) and the signal beam (9) being synchronisable in angle and position using measurement data from the optical sensor (10).

4. Optical system (20) according to any of the preceding claims, **characterised by** a rotational feed-in mirror (4), the signal beam (9) and the auxiliary beam (10) being feedable via the rotational feed-in mirror (4) into the rotation system (13), in particular being deflectable onto the axial feed-in mirror (3) .

5. Optical system (20) according to claim 4, **characterised in that**,
- from the reference mirror (2), the auxiliary beam (11) can be reflected back to form the reflected auxiliary beam (12) in part and can be passed through the reference mirror (2) to map the auxiliary beam projection (16) onto the position detector (1) in part, and
- wherein a second radius (r) of the second circular path can be influenced by tilting the rotational feed-in mirror (4).

6. Optical system (20) according to any of the preceding claims, **characterised in that** the auxiliary light source is a laser light source.

7. Optical system (20) according to any of the preceding claims, **characterised by** a control device (21), the control device (21) being set up
- to tilt the reference mirror (8) until the first radius (αᵣ) of the first circular path of the reflected auxiliary beam projection (17) on the angle sensor takes on a zero value,
- to tilt the axial feed-in mirror (3) until the first centre point coordinates (αₓ, α_{y}) of the first circular path of the reflected auxiliary beam projection (17) on the angle sensor correspond to the coordinates from which the auxiliary beam (11) was emitted, and
- to tilt the rotational feed-in mirror (4) and the axial feed-in mirror (3) in combination until the second radius (r) of the second circular path takes on a zero value.

8. Optical system (20) according to any of the preceding claims, **characterised by** a control device (21), the control device (21) being set up
- to actuate the rotation system (13) to rotate about the axis of rotation (6),
- to determine the first centre point coordinates (αₓ, α_{y}) of the first circular path,
- to determine a necessary tilt of the axial feed-in mirror (3) in order for the centre point coordinates (αₓ, α_{y}) of the first circular path of the reflected auxiliary beam projection (17) on the angle sensor to correspond to the coordinates from which the auxiliary beam (11) was emitted,
- to tilt the axial feed-in mirror (3) through the necessary tilt, and
- to tilt the rotational feed-in mirror (4) and the axial feed-in mirror (3) in combination until the second radius (r) of the second circular path takes on a zero value.

9. Optical system (20) according to any of the preceding claims, **characterised by** a control device (21), the control device (21) being set up
- to actuate the rotation system (13) to rotate about the axis of rotation (6),
- to determine the first centre point coordinates (αₓ, α_{y}) of the first circular path and the second radius (r) of the second circular path,
- to determine a necessary tilt of the axial feed-in mirror (3) and rotational feed-in mirror (4) in order for the first centre point coordinates (αₓ, α_{y}) of the first circular path of the reflected auxiliary beam projection (17) on the angle sensor to correspond to the coordinates from which the auxiliary beam (11) was emitted and in order for the second radius (r) to become zero, and
- to tilt the axial feed-in mirror (3) and the rotational feed-in mirror (4) through the necessary tilt.

10. Optical system (20) according to any of the preceding claims, **characterised by** a control device (21), the control device (21) being a regulation device for keeping the auxiliary beam (10) on the axis of rotation (6).

11. Optical system (20) according to any of the preceding claims, **characterised in that** the rotation system (13) comprises an azimuthal rotation system (13') and an elevational rotation system (13"),
- the azimuthal rotation system (13') being rotatable about an azimuthal axis of rotation (6'),
- the elevational rotation system (13") being rotatable about an elevational axis of rotation (6"), which is in particular perpendicular to the azimuthal axis of rotation (6'),
- the axial feed-in mirror (3) comprising an azimuthal axial feed-in mirror (3') for feeding the signal beam (9) and the auxiliary beam (11) into the azimuthal rotation system (13') and an elevational axial feed-in mirror (3") for feeding the signal beam (9) and the auxiliary beam (11) into the elevational rotation system (13"),
- the azimuthal rotation system (13') having:
o an azimuthal signal feed-out mirror (8') for feeding the signal beam (9) out of the azimuthal rotational system (13'), and
- the elevational rotation system (13") having:
o an elevational signal feed-out mirror (8") for feeding the signal beam (9) out of the elevational rotation system (13").

12. Method for adjusting a signal beam (9) using an optical system (20) according to any of claims 1 to 11, **characterised by** the steps of:
- tilting the reference mirror (2) until the first radius (αᵣ) of the first circular path of the reflected auxiliary beam projection (17) on the angle sensor takes on a zero value,
- tilting the axial feed-in mirror (3) until the first centre point coordinates (αₓ, α_{y}) of the circular path of the reflected auxiliary beam projection (17) on the angle sensor correspond to the coordinates from which the auxiliary beam (11) was emitted, and
- tilting the rotational feed-in mirror (4) and the axial feed-in mirror (3) in combination until the second radius (r) of the second circular path takes on a zero value.

13. Method according to claim 12, **characterised by** the steps of:
- rotating the rotation system (13) about the axis of rotation (6),
- determining the first centre point coordinates (αₓ, α_{y}) of the first circular path,
- determining a necessary tilt of the axial feed-in mirror (3) in order for the centre point coordinates (αₓ, α_{y}) of the first circular path of the reflected auxiliary beam projection (17) on the angle sensor to correspond to the coordinates from which the auxiliary beam (11) was emitted,
- tilting the axial feed-in mirror (3) through the necessary tilt, and
- tilting the rotational feed-in mirror (4) and the axial feed-in mirror (3) in combination until the second radius (r) of the second circular path takes on a zero value.

14. Method according to either claim 12 or claim 13, **characterised by** the steps of:
- rotating the rotation system (13) about the axis of rotation (6),
- determining the first centre point coordinates (αₓ, α_{y}) of the first circular path and the second radius (r) of the second circular path,
- determining a necessary tilt of the axial feed-in mirror (3) and rotational feed-in mirror (4) in order for the first centre point coordinates (αₓ, α_{y}) of the circular path of the reflected auxiliary beam projection (17) on the angle sensor to correspond to the coordinates from which the auxiliary beam (11) was emitted and in order for the second radius (r) to become zero, and
- tilting the axial feed-in mirror (3) and the rotational feed-in mirror (4) through the necessary tilt.

## Revendications

1. Système optique (20), comprenant :
- une entrée de signal (18) pour recevoir un faisceau de signal (9),
- une sortie de signal (19) pour délivrer le faisceau de signal (9),
- une source de lumière auxiliaire pour émettre un faisceau auxiliaire (11), le faisceau auxiliaire (11) étant synchrone en angle et en position avec le faisceau de signal (9),
- un système rotatif (13), le système rotatif (13) pouvant tourner autour d'un axe de rotation (6), et
- un miroir de couplage d'axes (3) pour coupler le faisceau de signal (9) et le faisceau auxiliaire (11) dans le système rotatif (13),
- dans lequel le système rotatif (13) présente :
o un miroir de découplage de signal (8) pour découpler le faisceau de signal (9) du système rotatif (13),
o un miroir de référence (2), et
o un détecteur de position (1) pour détecter une projection de faisceau auxiliaire (16) du faisceau auxiliaire (11),
- dans lequel le faisceau de signal (9) peut être dirigé depuis l'entrée de signal (18) par le miroir de couplage d'axes (3) vers le miroir de découplage de signal (8), et le faisceau auxiliaire (11) peut être dirigé par le miroir de couplage d'axes (3) à travers le miroir de découplage de signal (8) sur le miroir de référence (2), le faisceau auxiliaire (11) pouvant être, au moins en partie, réfléchi par le miroir de référence (2) en un faisceau auxiliaire de réflexion (12),
- dans lequel le système optique (20) comprend en outre un capteur d'angle au moyen duquel une déviation angulaire entre le faisceau auxiliaire (11) et le faisceau auxiliaire de réflexion (12) peut être détectée,
- dans lequel le miroir de couplage d'axes (3) et le miroir de référence (2) peuvent être inclinés afin d'orienter le faisceau de signal (9) parallèlement à l'axe de rotation (6) sur la base de la déviation angulaire mesurée,
**caractérisé en ce que**
- la projection de faisceau auxiliaire (16) décrit une deuxième trajectoire circulaire lorsque le faisceau auxiliaire (11) est orienté parallèlement à l'axe de rotation (6) et que le dispositif de rotation (13) tourne, et
- une projection de faisceau auxiliaire de réflexion (17) sur le capteur d'angle décrit une première trajectoire circulaire lorsque le système rotatif (13) tourne, un premier rayon (αᵣ) de la première trajectoire circulaire pouvant être influencé par une inclinaison du miroir de réflexion (2) et des premières coordonnées de point central (α*ₓ*, α*_{y}*) de la première trajectoire circulaire pouvant être influencées par une inclinaison du miroir de couplage d'axes (3).

2. Système optique (20) selon la revendication 1, **caractérisé en ce que** le capteur d'angle et la source de lumière auxiliaire sont regroupés dans un dispositif, en particulier dans un autocollimateur (5).

3. Système optique (20) selon l'une des revendications précédentes, **caractérisé par** un miroir de couplage de signal (7),
- dans lequel le faisceau de signal (9) peut être guidé depuis l'entrée de signal (18) en partie par le miroir de couplage de signal (7) vers le miroir de couplage d'axes (3) et en partie à travers le miroir de couplage de signal (7) vers un capteur optique (10), et
- dans lequel le faisceau auxiliaire (11) peut être guidé depuis la source de lumière auxiliaire en partie par le miroir de couplage de signal (7) vers le capteur optique (10) et en partie à travers le miroir de couplage de signal (7) vers le miroir de couplage d'axes (3), et
- dans lequel le faisceau auxiliaire (11) et le faisceau de signal (9) peuvent être synchronisés en angle et en position sur la base de données de mesure du capteur optique (10).

4. Système optique (20) selon l'une des revendications précédentes, **caractérisé par** un miroir de couplage rotatif (4), le faisceau de signal (9) et le faisceau auxiliaire (10) pouvant être couplés dans le système rotatif (13), en particulier pouvant être dirigés sur le miroir de couplage d'axes (3), par le miroir de couplage rotatif (4).

5. Système optique (20) selon la revendication 4, **caractérisé en ce que**
- le faisceau auxiliaire (11) peut être en partie réfléchi par le miroir de référence (2) en faisceau auxiliaire de réflexion (12) et en partie guidé à travers le miroir de référence (2) pour reproduire la projection de faisceau auxiliaire (16) sur le détecteur de position (1), et
dans lequel un deuxième rayon (r) de la deuxième trajectoire circulaire peut être influencé en inclinant le miroir de couplage rotatif (4).

6. Système optique (20) selon l'une des revendications précédentes, **caractérisé en ce que** la source de lumière auxiliaire est une source de lumière laser.

7. Système optique (20) selon l'une des revendications précédentes, **caractérisé par** un dispositif de commande (21), le dispositif de commande (21) étant conçu
- pour incliner le miroir de référence (8) jusqu'à ce que le premier rayon (αᵣ) de la première trajectoire circulaire de la projection de faisceau auxiliaire de réflexion (17) sur le capteur d'angle donne la valeur zéro,
- pour incliner le miroir de couplage d'axes (3) jusqu'à ce que les premières coordonnées de point central (α*ₓ*, α_{y}) de la première trajectoire circulaire de la projection de faisceau auxiliaire de réflexion (17) sur le capteur d'angle correspondent aux coordonnées à partir desquelles le faisceau auxiliaire (11) a été émis, et
- pour incliner le miroir de couplage rotatif (4) et le miroir de couplage d'axes (3) de façon combinée jusqu'à ce que le deuxième rayon (r) de la deuxième trajectoire circulaire donne la valeur zéro.

8. Système optique (20) selon l'une des revendications précédentes, **caractérisé par** un dispositif de commande (21), le dispositif de commande (21) étant conçu
- pour amener le système rotatif (13) à tourner autour de l'axe de rotation (6),
- pour déterminer les premières coordonnées de point central (αₓ, α_{y}) de la première trajectoire circulaire,
- pour déterminer une inclinaison nécessaire du miroir de couplage d'axes (3) afin que les coordonnées de point central (αₓ, α_{y}) de la première trajectoire circulaire de la projection de faisceau auxiliaire de réflexion (17) sur le capteur d'angle correspondent aux coordonnées à partir desquelles le faisceau auxiliaire (11) a été émis,
- pour incliner le miroir de couplage d'axes (3) de l'inclinaison nécessaire, et
- pour incliner le miroir de couplage rotatif (4) et le miroir de couplage d'axes (3) de façon combinée jusqu'à ce que le deuxième rayon (r) de la deuxième trajectoire circulaire donne la valeur zéro.

9. Système optique (20) selon l'une des revendications précédentes, **caractérisé par** un dispositif de commande (21), le dispositif de commande (21) étant conçu
- pour amener le système rotatif (13) à tourner autour de l'axe de rotation (6),
- pour déterminer les premières coordonnées de point central (αₓ, α_{y}) de la première trajectoire circulaire ainsi que le deuxième rayon (r) de la deuxième trajectoire circulaire,
- pour déterminer une inclinaison nécessaire du miroir de couplage d'axes (3) et du miroir de couplage rotatif (4) afin que les premières coordonnées de point central (αₓ, α_{y}) de la première trajectoire circulaire de la projection de faisceau auxiliaire de réflexion (17) sur le capteur d'angle correspondent aux coordonnées à partir desquelles le faisceau auxiliaire (11) a été émis et que le deuxième rayon (r) devienne nul, et
- pour incliner le miroir de couplage d'axes (3) et le miroir de couplage rotatif (4) de l'inclinaison nécessaire.

10. Système optique (20) selon l'une des revendications précédentes, **caractérisé par** un dispositif de commande (21), le dispositif de commande (21) étant un dispositif de régulation pour maintenir le faisceau auxiliaire (10) sur l'axe de rotation (6).

11. Système optique (20) selon l'une des revendications précédentes, **caractérisé en ce que** le système rotatif (13) comprend un système rotatif d'azimut (13') et un système rotatif d'élévation (13"),
- dans lequel le système rotatif d'azimut (13') peut tourner autour d'un axe de rotation d'azimut (6'),
- dans lequel le système rotatif d'élévation (13") peut tourner autour d'un axe de rotation d'élévation (6") qui est en particulier perpendiculaire à l'axe de rotation d'azimut (6'),
- dans lequel le miroir de couplage d'axes (3) comprend un miroir de couplage d'axes d'azimut (3') pour coupler le faisceau de signal (9) et le faisceau auxiliaire (11) dans le système rotatif d'azimut (13') et un miroir de couplage d'axes d'élévation (3") pour coupler le faisceau de signal (9) et le faisceau auxiliaire (11) dans le système rotatif d'élévation (13"),
- dans lequel le système rotatif d'azimut (13') présente :
o un miroir de découplage de signal d'azimut (8') pour découpler le faisceau de signal (9) du système rotatif d'azimut (13'), et
- dans lequel le système rotatif d'élévation (13") présente :
o un miroir de découplage de signal d'élévation (8") pour découpler le faisceau de signal (9) du système rotatif d'élévation (13").

12. Procédé de réglage d'un faisceau de signal (9) avec un système optique (20) selon l'une des revendications 1 à 11, **caractérisé par** les étapes consistant à :
- incliner le miroir de référence (2) jusqu'à ce que le premier rayon (αᵣ) de la première trajectoire circulaire de la projection de faisceau auxiliaire de réflexion (17) sur le capteur d'angle donne la valeur zéro,
- incliner le miroir de couplage d'axes (3) jusqu'à ce que les premières coordonnées de point central (αₓ, α_{y}) de la trajectoire circulaire de la projection de faisceau auxiliaire de réflexion (17) sur le capteur d'angle correspondent aux coordonnées à partir desquelles le faisceau auxiliaire (11) a été émis, et
- incliner de façon combinée le miroir de couplage rotatif (4) et le miroir de couplage d'axes (3) jusqu'à ce que le deuxième rayon (r) de la deuxième trajectoire circulaire donne la valeur zéro.

13. Procédé selon la revendication 12, **caractérisé par** les étapes consistant à :
- faire tourner le système rotatif (13) autour de l'axe de rotation (6),
- déterminer les premières coordonnées de point central (αₓ, α_{y}) de la première trajectoire circulaire,
- déterminer une inclinaison nécessaire du miroir de couplage d'axes (3) afin que les premières coordonnées de point central (α*ₓ*, α*_{y}*) de la première trajectoire circulaire de la projection de faisceau auxiliaire de réflexion (17) sur le capteur d'angle correspondent aux coordonnées à partir desquelles le faisceau auxiliaire (11) a été émis,
- incliner le miroir de couplage d'axes (3) de l'inclinaison nécessaire, et
- incliner de façon combinée le miroir de couplage rotatif (4) et le miroir de couplage d'axes (3) jusqu'à ce que deuxième rayon (r) de la deuxième trajectoire circulaire donne la valeur zéro.

14. Procédé selon la revendication 12 ou 13, **caractérisé par** les étapes consistant à :
- faire tourner le système rotatif (13) autour de l'axe de rotation (6),
- déterminer les premières coordonnées de point central (αₓ, α*_{y}*) de la première trajectoire circulaire ainsi que le deuxième rayon (r) de la deuxième trajectoire circulaire,
- déterminer une inclinaison nécessaire du miroir de couplage d'axes (3) et du miroir de couplage rotatif (4) afin que les premières coordonnées de point central (αₓ, α_{y}) de la trajectoire circulaire de la projection de faisceau auxiliaire de réflexion (17) sur le capteur d'angle correspondent aux coordonnées à partir desquelles le faisceau auxiliaire (11) a été émis et que le deuxième rayon (r) devienne nul, et
- incliner le miroir de couplage d'axes (3) et le miroir de couplage rotatif (4) de l'inclinaison nécessaire.
